# EUROPEAN PATENT SPECIFICATION

(11) **EP 1 221 749 B1**
(45) Date of publication and mention of the grant of the patent: **21.07.2010**
(21) Application number: 02004996.1
(22) Date of filing: 06.03.2002
(51) Int. Cl.: H02G 3/08

(54) **Box for electrical installations, with passive fire protection**
Elektro-Installationsdose mit passiver Feuerschutzeinrichtung
Boîtier d'installation électrique à protection passive contre le feu

(43) Date of publication of application: 10.07.2002
(73) Proprietor: MISURE CONTROLLI SICUREZZA S.A.S di DAVIDE LURASCHI, 20123 Milano (IT)
(72) Inventor: Luraschi, Franco, 20123 Milan (IT)
(74) Representative: Ripamonti, Enrico

(56) References cited:
- EP-A- 1 014 523
- DE-A- 2 834 189
- DE-A- 19 831 384
- US-A- 3 995 102
- US-A- 4 616 104
- US-A- 4 667 840

## Description

The present invention relates to electrical installation boxes, such as component boxes and junction boxes, for application to walls, and more particularly their passive fire protection.

As is well known to the expert of the art, plasterboard walls used for internal partitions of buildings consist of a load-bearing structure (of wood or metal, in particular galvanized steel) faced on both sides with one or more plaster-based boards. The boards on the respective sides of the wall bound an interspace into which the service installations (in particular the electrical installation) or insulating material (mineral wool or other fibrous material) can be inserted.

In compliance with M.I. Circular 91/61, all walls (including plasterboard walls) required to present fire resistance (passive protection) either have to be analytically calculated, or (the case which occurs most frequently in practice) must correspond to a laboratory-certified prototype which generally reproduces a blind wall without openings or holes.

The problem of passive fire protection for electrical installation boxes (boxes for containing switches, sockets and similar electrical devices, or junction boxes) has been present for a considerable time to the expert of the art, and has involved various solutions, none of which has been found to be completely satisfactory.

One solution consists of positioning such boxes on plasterboard walls by firstly making an on-site aperture of suitable dimensions in one of the two sides of the wall, or rather in the board or in the superimposed boards forming one side of the wall. As will be apparent, the said aperture forms a point of discontinuity, which results in disqualification of the wall with respect to the laboratory-tested prototype.

A very artisan solution normally used in an attempt to avoid this disqualification consists of preparing a mix of plaster powder, water and mineral wool, which is spread on site over the rear of the box while held in position. When the mix has hardened, a protection shell is obtained which attempts to recreate the conditions of the actual wall without the aperture for the box.

Although fairly simple, relatively fast and cheap, this solution is a makeshift solution which presents certain drawbacks. In particular, the protection shell obtained in this manner not only has dimensions which can vary each time, and in particular a thickness which can vary from one point to another, but has to be formed on site before the plasterboard wall is finished (i.e. before the other side of the wall is applied). Moreover with this solution, it is not possible to ensure protection of the electric cable exit holes (which in certain situations could constitute a passage for fire and smoke). Again, this solution does not allow inspection once the relative wall is finished. Finally, such a solution cannot be certified: nobody is able to guarantee, and hence to declare, that the characteristics (in particular the simple dimensional characteristics) of a shell formed on site correspond to a prototype tested in the laboratory.

In recent years materials have been sought as replacements for said plaster-based mix, such as heat-expanding polyurethane foam or insulating and/or heat-expanding sheets and/or plates Box structures have also been used formed from insulating and/or heat-expanding plates, which are preassembled using metal clips or are to be assembled on site. Even these solutions are not however free from drawbacks. In particular, the use of polyurethane foam, being heat-expanding, solves the problem of fire and smoke passage through the cable passage holes, but it again has to be installed before completion of the plasterboard wall, in addition to not allowing future inspection. The same applies to box structures. The solution using the aforesaid insulating sheets or plates does not however prevent fire or smoke passage through the cable passage holes, unless heat-expanding material is later added in proximity thereto. More generally, all these solutions require a considerable time for their execution, and the result depends very much on the experience and ability of the installer; the result is the impossibility of certifying all these solutions as corresponding to a determined laboratory-tested prototype.

US-A-4667840 describes an electrical installation box with passive fire protection, to be applied to walls and comprising a prefrabricated shell of incombustibile material. The shell has a body of open container shape and is embeddable in an aperture previously provided in one side of a wall.

The cavity of the shell faces outwards and receives or is intended to receive the contents of an electrical installation box. The shell presents cable passage apertures. The electrical installation box comprises also means for fixing the shell to the wall. A fire retardant intumescent material can be provided to close the cable passage apertures.

The object of the present invention is to obviate the aforesaid drawbacks of the solutions of the known art.

This object is attained by the electrical installation box according to the enclosed claims.

The aforesaid prefabricated shell can conveniently be of plaster or be plaster-based, obtained by casting a relative mix of plaster in powder form, water and possibly other suitable components, in an appropriate form or mould.

The shell is preferably provided with an edge flange along the opening of its container-shaped body, the flange forming one piece with this body. The flange defines a surface which is positioned coplanar with the relative side of the plasterboard wall.

Conveniently, the flange has an outwardly flared circular outer edge. To embed the shell in the plasterboard wall, an electric drill can be used in this case, provided with a suitable bit (cup or ring shaped), enabling a flared circular aperture of diameter substantially equal to that of the shell circular flange to be comfortably and quickly formed in the relative side of the wall and in the required position.

As the cable passage apertures present in the box body could constitute a passage for fire or smoke, an intumescent fire retardant material is provided within the shell cavity to close the cable passage holes when subjected to the effects of a fire.

The means for fixing the shell to the wall preferably comprise:
- at least two through fixing holes provided in the shell in opposite positions;
- a toggle bolt cooperating with each hole.

Preferably the through fixing holes provided in the shell flange have a diameter such as to enable an intumescent fire retardant material to be inserted into them, so as to eliminate any possibility of passage for fire or smoke.

The invention will be more easily understood from the ensuing description of one embodiment thereof given by way of example. In this description reference is made to the accompanying drawings, in which:
Figure 1 shows on its left side a front elevation of a box according to the present invention, and on its right side a rear elevation thereof;
Figure 2 is a section therethrough taken on the line 2-2 of Figure 1, in which part of the lateral boards of a relative plasterboard wall is also visible;
Figure 3 is a section therethrough taken on the line 3-3 of Figure 1;
Figure 4 is a section therethrough taken on the line 4-4 of Figure 1;
Figure 5 shows on its left side a section on the line 5-5 of Figure 4, and on its right side a section on the line 6-6 of Figure 4.

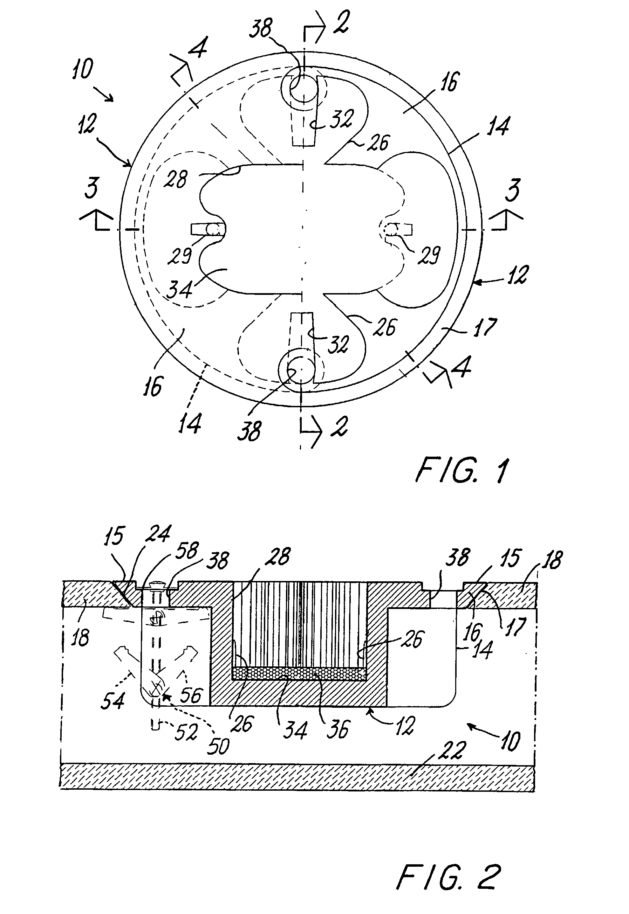

As can be seen from the figures, the box 10 comprises a shell 12 the body 14 of which is formed as a container, which in this specific case (see plan view) is of overall circular shape and presents an open cavity 28. The shell 12 also presents a circular edge flange 16 forming one piece with the body 14. As can be seen from Figures 2-4, in which the box is shown installed, the flat outer face 15 of the flange 16 is coplanar with the outer face of the board 18 forming the relative outer surface of a plasterboard wall, the opposite outer surface of this wall consisting of a second board 22. It should be noted that the boards of the plasterboard wall can also be more than one per side, but this does not constitute a critical element.

As already stated, the circular flange 16 has a flared outer edge 17 (see Figures 2-4 in particular) in order to easily mate with the likewise flared edge of a circular aperture 24 previously made in the board 18. The circular aperture 24 can be made very easily and quickly using a common professional electric drill provided with a suitable bit (cup or circular ring shaped).

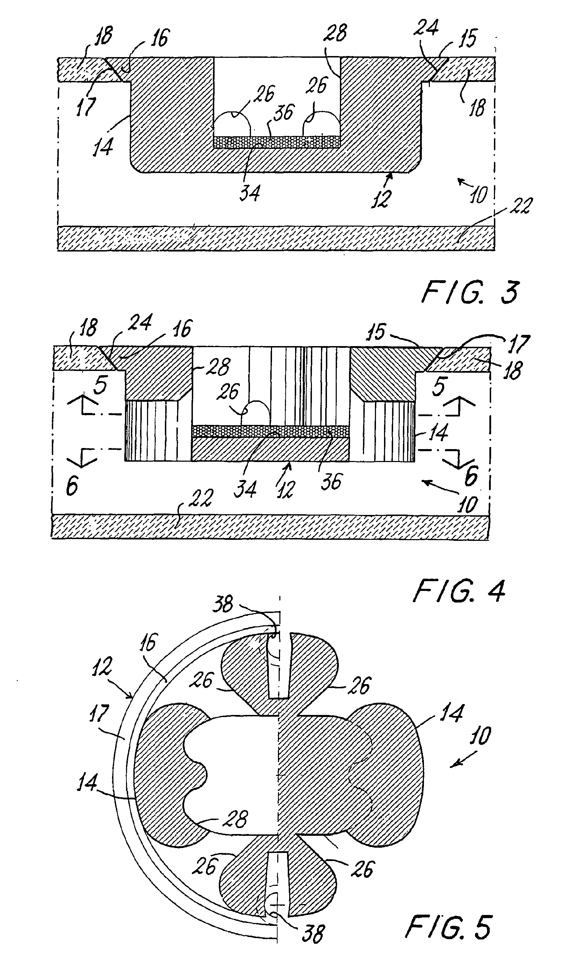

In the lateral wall of the container-shaped body 14 of the shell 12 there are provided four through apertures 26 (Figures 3-5) forming the so-called cable passages, through which apertures 26 there can be passed the electric cables (not shown) to be connected , for example, to the components contained in the open cavity 28. On the inner bottom surface 34 of the cavity 28 there is provided in this specific case a layer 36 of intumescent fire retardant material the purpose of which, in the case of fire, and if appropriate, is to considerably increase its volume in order to close the cable passage apertures 26, or rather the free space existing between these apertures and the relative electric cables (not shown for simplicity).

To fix the shell 12 to the board 18 of the plasterboard wall, two through holes 38 (see Figures 1 and 2 in particular) are provided in the flange 16 in symmetrical positions corresponding with two symmetrically opposing lateral recesses 32.

As is apparent from Figure 2, the shell 12 is fixed to the board 18 of the plasterboard wall by using two conventional toggle bolts (Figure 2 shows with dashed lines only the left bolt, indicated overall by 50). Each of the two toggle bolts 50, located in the relative recess 32, comprises a screw 52 with relative washer 58 and a toggle with two foldable arms 54 and 56.

Figure 2 clearly shows how the shell 12 is fixed by the toggle bolts 50.

A split ring (not shown for simplicity) of intumescent fire retardant material can be inserted into the fixing holes 38, it being easily obtained from a commercially available strip of such material, as in the case of the base layer 36.

Figure 1 shows means 29 for applying the box closure cover (not shown for simplicity) to the shell 12. In particular, these means can be plastic inserts embedded in the shell 18, to receive the relative screws to maintain the box cover in position.

From the aforegoing it is apparent that the box of the invention, being precisely definable in all its characteristics, both dimensional and with regard to the materials used, can be certified by an authorized laboratory and is exactly reproducible. The intrinsic simplicity of the aforedescribed and illustrated box is also apparent, as is its ease of production (especially if the shell is formed of plaster or plaster-based material) and the simplicity and speed with which it can be installed, all of which is beneficially reflected in its production and installation costs.

It is important to note that the use of the box 10 is not limited to plasterboard walls, but that it can be usefully used in all walls in which an aperture can be formed suitable to enable it to be received and be permanently fixed. In particular, the box can also be used in traditional masonry walls formed from perforated bricks and mortar.

## Claims

1. An electrical installation box (10) with passive fire protection, to be applied to walls (18, 22), and comprising:
- a prefrabricated shell (12) of incombustible material, having a body (14) of open container shape, the shell (12) being embeddable in an aperture (24) previously provided in one side of a wall, the cavity (28) of the shell (12) facing outwards and receiving or being intended to receive the contents of an electrical installation box (29), the shell (12) presenting cable passage apertures (26); and
- means (38, 50) for fixing the shell (12) to the wall (18;22);
- a fire retardant intumescent material (36) able to close the cable passage apertures (26) in case of fire is provided within the cavity (28);
**characterized in that** the fire retardant material (36) is located on the base of the cavity (38) so that, in case of fire, it considerably increases its volume in order to close the cable passage apertures (26), or the free space existing between these apertures and the relative electric cables.

2. A box (10) as claimed in claim 1, wherein the container-shaped body (14) of the shell (12) is of approximately circular external shape when viewed frontally.

3. A box (10) as claimed in claim 1, wherein the shell (12) is of plaster or is plaster-based, obtained by casting a relative mix in a suitable form or mould.

4. A box (10) as claimed in claim 1, wherein the shell (12) is provided with an edge flange (16) along the opening of the cavity (28), the flange (16) forming one piece with the body (14).

5. A box (10) as claimed in claim 4, wherein the flange (16) has a circular outer edge.

6. A box (10) as claimed in claim 5, wherein the edge (17) of the flange (16) is flared outwards.

7. A box (10) as claimed in claim 1, wherein the means for fixing the shell (12) to the wall (18) comprise:
- at least two through fixing holes (38) provided in opposite positions in the shell (12);
- a toggle bolt (50) cooperating with each hole (38).

8. A box (10) as claimed in claim 1, wherein means (29) for applying the closure cover are provided.

## Patentansprüche

1. Kasten (10) für eine elektrische Installation mit einem passiven Feuerschutz, um an Wänden (18, 22) verwendet zu werden, und umfassend:
- eine vorgefertigte Schale (12) aus einem nicht brennbaren Material, welche einen Körper (14) einer offenen Behälterform aufweist, wobei die Schale (12) in eine Öffnung (24), welche zuvor an einer Seite einer Wand vorgesehen wurde, einbaubar ist, wobei der Hohlraum (28) der Schale (12) nach außen zeigt und die Inhalte eines Kastens für eine elektrische Installation (29) aufnimmt oder aufnehmen soll, wobei die Schale (12) Kabeldurchgangsöffnungen (26) bietet; und
- Mittel (38, 50) zum Befestigen der Schale (12) an der Wand (18; 22);
- wobei ein feuerhemmendes Brandschutzmaterial (36), welches in der Lage ist, die Kabeldurchgangsöffnungen (26) im Fall eines Feuers zu verschließen, innerhalb des Hohlraums (28) vorgesehen ist;
**dadurch gekennzeichnet, dass** das feuerhemmende Material (36) an dem Boden des Hohlraums (38) derart angeordnet ist, dass es im Fall eines Feuers sein Volumen erheblich vergrößert, um die Kabeldurchgangsöffnungen (26) oder den freien Platz, welcher zwischen diesen Öffnungen und den damit in Beziehung stehenden elektrischen Kabeln existiert, zu schließen.

2. Kasten (10) nach Anspruch 1, wobei der behälterförmige Körper (14) der Schale (12) von näherungsweise kreisförmiger äußerer Form ist, wenn er von vorne betrachtet wird.

3. Kasten (10) nach Anspruch 1, wobei die Schale (12) aus Gips ist oder gipsbasiert ist und durch Abformen einer entsprechenden Mischung in einer geeigneten Form oder Gießform gewonnen wird.

4. Kasten (10) nach Anspruch 1, wobei die Schale (12) mit einem Randflansch (16) entlang der Öffnung des Hohlraums (28) versehen ist, wobei der Flansch (16) ein Stück mit dem Körper (14) bildet.

5. Kasten (10) nach Anspruch 4, wobei der Flansch (16) einen kreisförmigen Außenrand aufweist.

6. Kasten (10) nach Anspruch 5, wobei der Rand (17) des Flansches (16) nach außen umgebördelt ist.

7. Kasten (10) nach Anspruch 1, wobei die Mittel zum Befestigen der Schale (12) an der Wand (18) umfassen:
- mindestens zwei Befestigungsdurchgangslöcher (38), welche an gegenüberliegenden Positionen in der Schale (12) vorgesehen sind;
- einen Kipphebelbolzen (50), welcher mit dem jeweiligen Loch (38) zusammenarbeitet.

8. Kasten (10) nach Anspruch 1, wobei Mittel (29) zum Anbringen der Verschlussabdeckung vorgesehen sind.

## Revendications

1. Boîtier d'installation électrique (10) avec une protection passive contre l'incendie, devant être appliqué à des murs (18, 22), et comprenant :
- une coque préfabriquée (12) en matériau incombustible, ayant un corps (14) en forme de conteneur ouvert, la coque (12) pouvant être encastrée dans une ouverture (24) prévue à l'avance dans un côté d'un mur, la cavité (28) de la coque (12) faisant face vers l'extérieur et recevant ou étant destinée à recevoir le contenu d'un boîtier d'installation électrique (29), la coque (12) présentant des ouvertures pour le passage de câbles (26) ; et
- des moyens (3 8, 50) pour fixer la coque (12) au mur (18 ; 22) ;
- un matériau intumescent ignifugeant (36) capable de fermer les ouvertures pour le passage de câbles (26) en cas de feu étant pourvu à l'intérieur de la cavité (28) ;
**caractérisé en ce que** le matériau ignifugeant (36) est situé sur la base de la cavité (38) de sorte que, en cas de feu, il augmente considérablement son volume afin de fermer les ouvertures pour le passage de câbles (26), ou l'espace libre existant entre ces ouvertures et les câbles électriques relatifs.

2. Boîtier (10) selon la revendication 1, dans lequel le corps en forme de conteneur (14) de la coque (12) est de forme externe à peu près circulaire lorsque vue de face.

3. Boîtier (10) selon la revendication 1, dans lequel la coque (12) est en plâtre ou est à base de plâtre, obtenue en coulant un mélange correspondant dans une forme ou un moule approprié.

4. Boîtier (10) selon la revendication 1, dans lequel la coque (12) est pourvue d'une bride de bord (16) le long de l'ouverture de la cavité (28), la bride (16) formant une pièce avec le corps (14).

5. Boîtier (10) selon la revendication 4, dans lequel la bride (16) a un bord extérieur circulaire.

6. Boîtier (10) selon la revendication 5, dans lequel le bord (17) de la bride (16) est évasé vers l'extérieur.

7. Boîtier (10) selon la revendication 1, dans lequel les moyens pour fixer la coque (12) au mur (18) comprennent :
- au moins deux trous de fixation traversants (38) prévus dans des positions opposées dans la coque (12) ;
- un boulon à ailettes (50) coopérant avec chaque trou (38).

8. Boîtier (10) selon la revendication 1, dans lequel des moyens (29) pour appliquer le couvercle de fermeture sont fournis.
